Europäisches Patentamt

European Patent Office

Office européen des brevets

(11) Numéro de publication: **0 344 814**
**A2**

# (12) DEMANDE DE BREVET EUROPEEN

(21) Numéro de dépôt: 89110078.6

(22) Date de dépôt: 03.06.89

(51) Int. Cl.⁴: **G11B 17/22**

(30) Priorité: 03.06.88 BE 8800627

(43) Date de publication de la demande:
06.12.89 Bulletin 89/49

(84) Etats contractants désignés:
CH DE FR GB IT LI

(71) Demandeur: **Staar Development Company -S.A.**
**479 Avenue Louise**
**B-1050 Bruxelles(BE)**

(72) Inventeur: **Staar, Marcel**
**479 Avenue Louise**
**B-1050 Bruxelles(BE)**

(74) Mandataire: **Patentanwälte Dipl.-Ing. R. Splanemann Dr. B. Reitzner Dipl.-Ing. K. Baronetzky**
**Tal 13**
**D-8000 München 2(DE)**

(54) Système de changeur automatique pour supports d'informations.

(57) Changeur de supports d'informations tels que disques ou cartes optiques, disques en enveloppes ou cassettes individuelles de protection etc.., caractérisé en ce que des moyens sont prévus pour réaliser un magasin mobile de supports d'informations, en forme d'anneau dans lesquels les supports sont disposés à plat dans un plan proche de l'horizontale, parallèlement les uns par rapport aux autres, inclinés et décalés angulairement afin qu'ils puissent se chevaucher partiellement, des moyens sont prévus pour positionner dans le milieu de l'anneau, un appareil d'enregistrement/reproduction, fixe dans son plan horizontal, des moyens sont prévus pour le transport des supports, des moyens sont prévus pour maintenir une relation directe entre les éléments de repérage et d'identification et la position des supports d'informations.

FIG.1

# SYSTEME DE CHANGEUR AUTOMATIQUE POUR SUPPORTS D'INFORMATIONS.

Il existe déjà sur le marché de nombreux systèmes de changeurs destinés à manipuler automatiquement des supports d'informations contenus dans des magasins mobiles ou fixes, amovibles ou non.

Une grande capacité de stockage de supports est naturellement très souhaîtable et d'autant plus intéressante si les magasin peuvent être conçus très plats permettant de réaliser plus facilement des appareils portables et plus esthétiques.

Ces supports d'informations peuvent être par exemple des disques ou des cartes portant des enregistrements optiques, ou encore par exemple des petits disques d'enregistrements magnétiques contenus dans une cassette ou enveloppe individuelle de protection.

Le but de la présente invention est de proposer des moyens pour realiser un changeur automatique de supports d'informations multiples, très plat, très économique à réaliser et très fiable, dont les contenus puissent être facilement identifiables et sélectionnés.

Pour réaliser ces buts on propose essentiellement de réaliser un magasin mobile de support d'informations, en forme d'anneau ou partie d'anneau dans lesquels les supports sont disposés dans un plan proche de l'horizontale, parallèlement les uns aux autres, mais légèrement inclinés et décalés angulairement afin que les supports puissent se chevaucher partiellement, de façon régulière sur le pourtour de l'anneau; des moyens sont prévus pour positionner dans le milieu de l'anneau, un appareil d'enregistrement/reproduction, fixe dans son plan horizontal; des moyens sont prévus pour transporter le support d'informations, du magasin vers l'appareil de reproduction et vice versa; des moyens sont prévus pour maintenir centrés, les supports d'informations dans le magasin; des moyens sont prévus pour que chaque position dans le magasin soit en relation directe avec les éléments de repérage et d'identification des supports d'informations; des moyens sont prévus pour rendre le magasin des supports éventuellement amovible.

C'est conventionnellement que l'on parle ci-dedans de plan horizontal car l'appareil est conçu pour fontionner dans tous les plans, sans influence de la gravité.

Ce système peut être réalisé avec certaines fonctions manuelles ou de façon totalement automatique suivant les besoins.

Afin de bien faire comprendre l'invention, on décrira ci-après des exemples non-limitatifs.

On a représenté dans la FIG. I, un magasin I en forme d'anneau plat dans lequel des cavités ou couloirs 2 peuvent recevoir par exemple des disques optiques 3, des cartes optiques ou à circuits électroniques 4 ou des enveloppes rigides ou boîtiers 5 contenant de petits disques magnétiques ou optiques 6.

Le magasin est mobile et peut tourner dans un boîtier 7 muni d'une ouverture 8.

Lorsque un des emplacements 2 se trouve positionné en regard de l'ouverture 8, un support 3 par exemple peut être introduit ou retiré de l'appareil.

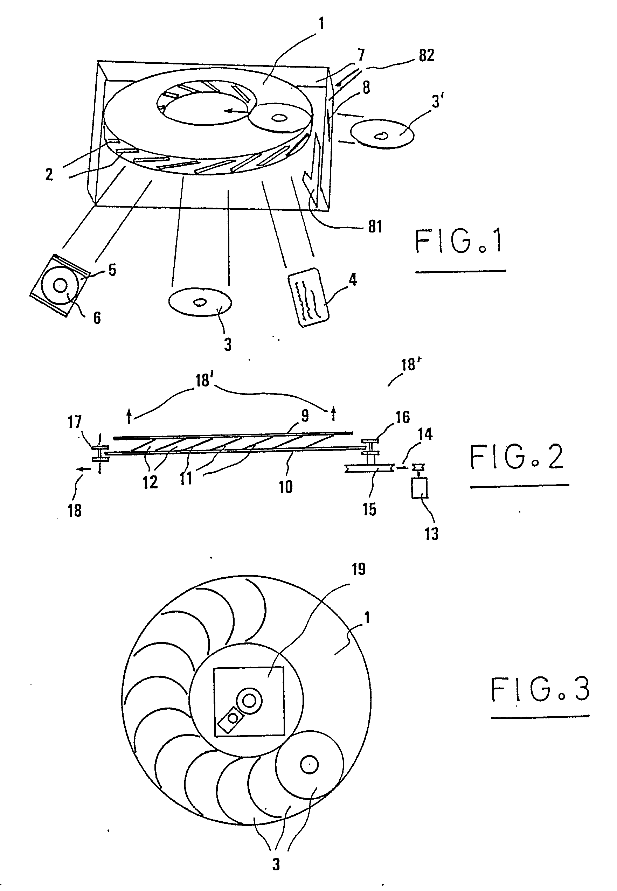

La FIG. 2 montre comment le magasin peut être entraîné en rotation.

Le magasin I a deux surfaces planes 9-I0 en forme d'anneaux.

Des parois II forment des cavités ou couloirs I2 pouvant recevoir les supports d'informations.

Un moteur fixe I3 entraîne par une courroie I4 une poulie I5 entraînant, par une roulette caoutchoutée I6, le magasin en rotation, guidé par des roulettes I7 disposées sur le pourtour du magasin.

Si on écarte momentanément par exemple la roulette quide I7 dans le sens de la flèche I8, le magasin devient enlevable dans le sens des flèches I8'.

La FIG. 3 montre comment les supports ici représenté sous forme de disques 3 se chevauchent et permettent de disposer une grande quantité des supports dans un magasin très plat.

Dans le centre du magasin mobile I est disposé un enregistreur/lecteur fixe I9 pour traîter les informations portées par les supports (3-4-6).

Chaque emplacement de support d'informations du magasin mobile doit venir se positionner en rapport avec les éléments fixes de l'appareil.

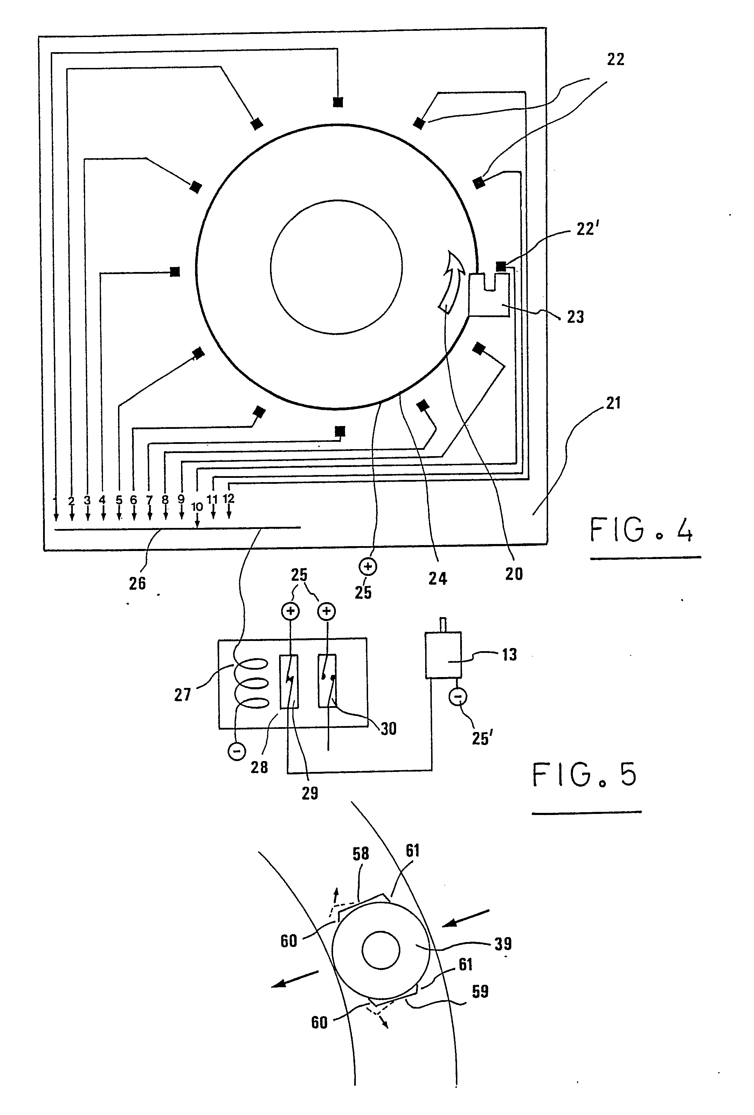

On a représenté dans la FIG. 4 un exemple de sélecteur permettant le positionnement de I2 supports d'informations.

Le magasin tourne dans le sens de la flèche 20 sur un chassis isolant 2I muni de plages conductrices de courant 22 disposées de façon concentrique par rapport au centre de pivotement du magasin.

Un frotteur 23, solidaire du magasin I forme un pont de courtcircuitage entre un anneau conducteur 24 et les plages 22 en tournant, le frotteur 23 conduira donc successivement chaque fois le courant électrique de la plage 24 vers les plages individuelles 22 alimentant celles-ci en courant positif provenant d'une source 25.

Les plages 22 aboutissent à des interrupteurs manuels qui permettent de programmer d'avance une ou plusieurs sélections, chaque plage 22, lorsque son interupteur est fermé, venant alimenter, par la connexion commune 26, la bobine 27 d'un relais 28.

Lorsque la bobine 27 n'est pas alimentée, l'interrupteur 29 qu'elle commande magnétiquement est normalement fermé et le moteur l3 reçoit donc du courant de la source 25-25′, et entraîne en rotation le magasin.

Le frotteur 23 balaye toutes les plages 22 et lorsqu'il arrivera à la plage 22′ qui est la sélection correspondant à l'interrupteur manuel N° l0 donné ici en exemple, la bobine 27 sera alimentée et l'interrupteur 29 s'ouvrira, et le magasin l qui était entraîné par le moteur l3 s'arrêtera.

Simultanément, un autre interrupteur 30 du relais 28 se fermera et enverra une impulsion pour commencer le cycle du mecanisme décrit ci-après.

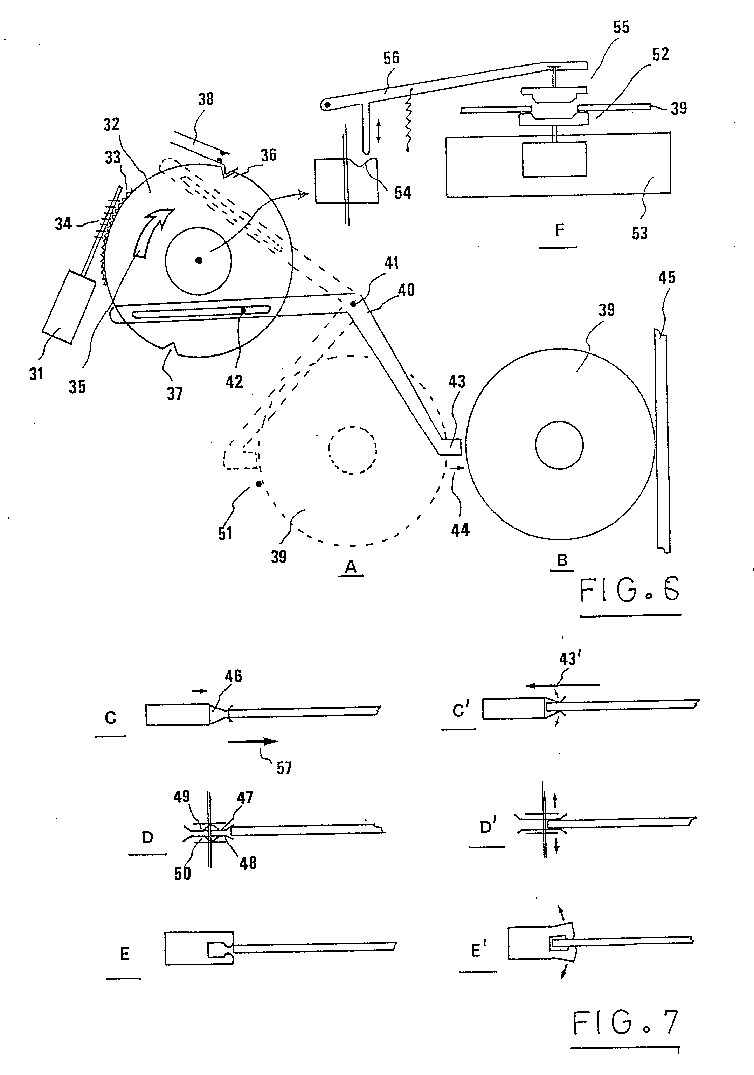

La FIG. 6 donne un exemple de cycle devant accomplir les fonctions mécaniques de transport des supports d'informations et de leur verrouillage.

Un moteur 31 entraine une came 32 par des dents 33 et une vis sans fin 34, dans le sens de la flêche 35.

Deux encoches 36-37 dans la came, agissent sur un interrupteur 38 pour réaliser 2 demi-cycles.

Aussitôt que le moteur 3l reçoit une impulsion par l'interrupteur 30 du relais 28, il entraine la came 32 en rotation et l'interrupteur 38 se ferme en étant poussé hors de l'encoche 36 et restera fermé jusqu'à ce que l'encoche 37 lui permettra de s'ouvrir, le moteur 31 sera donc alimenté pendant le demi-cycle qui aura amené le disque 39 de la position B dans le magasin, dans la position A dans lappareil d'enregistrement/reproduction.

Un levier 40 pivotant en 4l et entraîné par un téton 42 sur la came 32, pousse d'abord la pince 43 dans le sens de la flêche 44 et, comme le disque vient buter contre la paroi fixe 45, le bord du disque est agrippée comme montré dans la FIG. 7.

Cette pince peut être réalisée par exemple comme en C par les deux branches d'un ressort 46 qui s'écartent sous la poussée, ou par des cuvettes 47-48 sous l'action de rondelles ressort 49-50, ou par exemple réalisée en matière plastique souple moulée E, se pliant par élasticité.

Lorsque la pince a agrippé le bord du disque (C′, D′, E′), celui-ci peut être tiré par le levier 40 vers la position A, dans le sens la flêche 43′.

En venant buter contre le téton fixe 5l, le disque 39 s'arrête et la pince 43 en continuant, se dégage, et le disque se trouve sur le plateau moteur d'entraînement 52 d'un appareil de reproduction 53, (F).

Une rampe 54 faisant partie de la came 32 peut alors presser un noyau de centrage 55, porté par un levier 56, et le disque 39 est clamé (F).

A ce moment le premier demi-cycle est achevé. Lorsque les informations portées par le disque 39 seront traîtées, le moteur 31 pourra recevoir une impulsion et la deuxième moitié du cycle pourra commencer.

En tournant, la came 32 dégagera d'abord par la rampe 54, la clame 55-56.

Puis, comme le disque est libre, la pince 43 ne s'ouvre pas, la pression étant trop faible, mais repousse le disque par le bord comme dans les vues C-D-E jusqu'à son emplacement dans le magasin I, dans le sens de la flêche 57.

La FIG. 5 donne un exemple des moyens prévus pour centrer les supports d'informations dans le magasin.

Des pattes ressorts 58-59 peuvent être formées ou moulées directement dans les parois du magasin ou être réalisées par des lamelles ressort fixées sur les parois de celui-ci.

Le disque 3 sera maintenu centré, les pattes ressort ayant 2 branches 60-6l finissant le mouvement du disque aussi bien lors de son entrée manuelle dans le magasin par l'ouverture 8, que lors de son retour de l'appareil de reproduction vers le magasin.

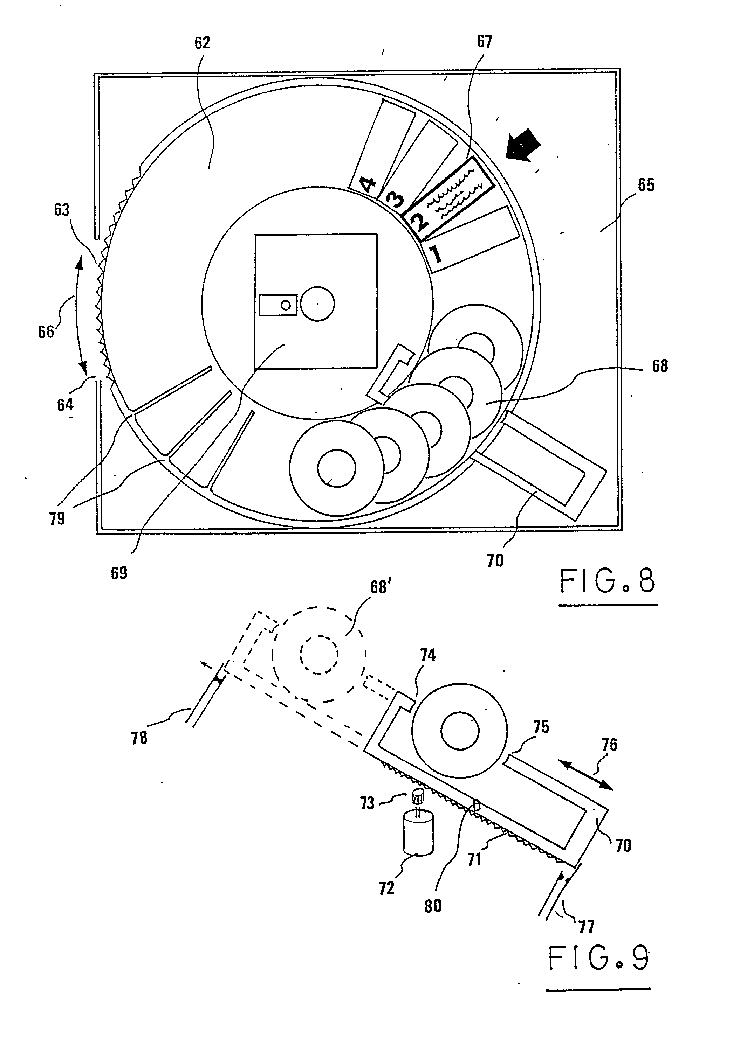

Dans la FIG. 4 on voit comment la position du magasin est en relation directe avec des éléments électriques de détection, et dans la FIG. 8 on voit comment des identifications placées sur le magasin sont en relation directe avec les positions des supports d'informations.

Les FIG. 8-9 montrent un appareil réalisé avec certaines fonctions manuelles.

Un magasin rotatif 62 est muni d'un rebord denteié 63 pouvant être entraîné en rotation manuelle au travers d'une ouverture 64 pratiquée dans un coffret 65, dans les sens des flêches 66.

Des identifications sont placées solidairement sur le magasin, lesquelles peuvent être délimitées et lues au travers par exemple d'une fenêtre pratiquée dans le couvercle du coffret 65.

Losqu'on amène donc dans la fenêtre du magasin, l'identification N° 2 donnée ici en exemple, on voit que le disque 68 correspondant se trouve en regard du mécanisme devant transporter le disque vers un appareil de traîtement 69.

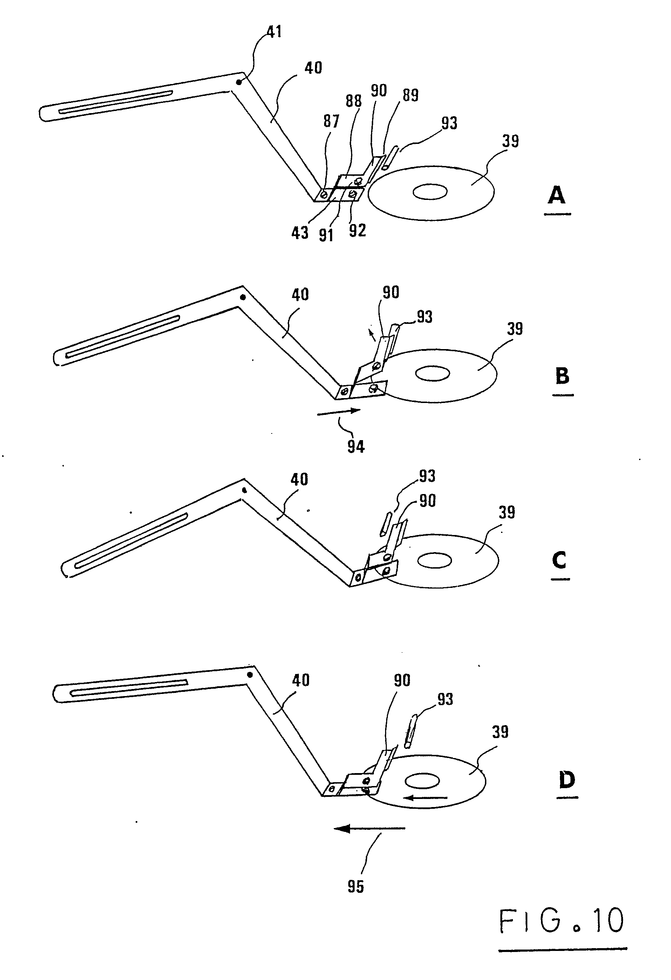

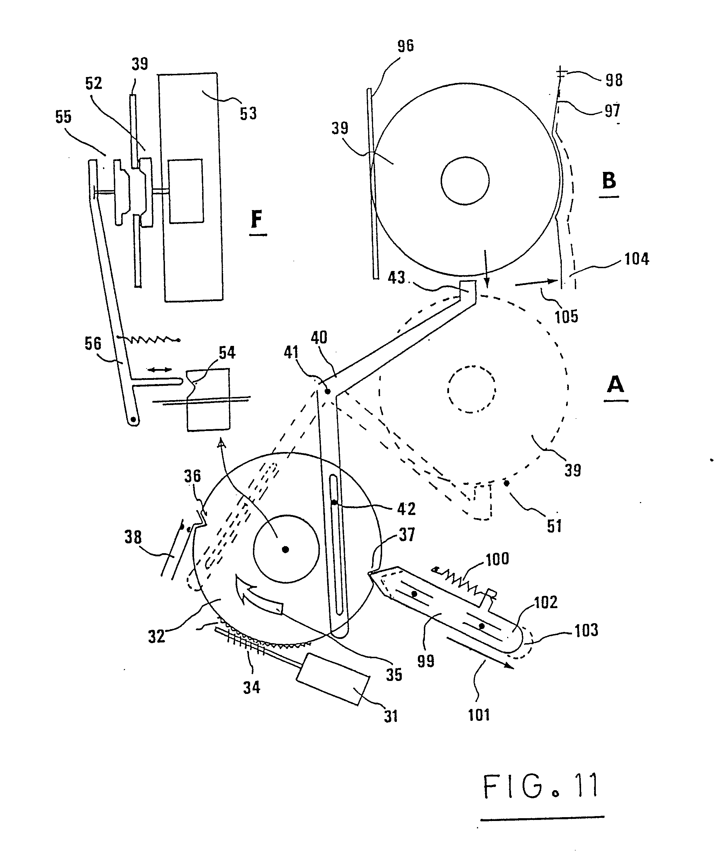

Ce mouvement peut aussi être manuel ou motorisé comme décrit dans la FIG. 9.

Les disques sont maintenus centrés dans le magasin 62 comme décrit précédemment.

Une glissière 70 peut se mouvoir dans un plan sensiblement pareil à celui des disques stockés.

Cette glissière est munie de dents 71 et pouvant être entraînée par un moteur et engrenage 72-73.

La glissière est munie de pattes 74-75 destinées à pousser le disque dans les sens des flêches 76 et amener le disque 68 dans la position 68′ dans l'appareil de reproduction/enregistrement et vice versa.

Un simple inverseur électrique manuel permet de commander le sens du moteur et des interrupteurs de butée 77-78 délimitent les fins de course de la glissière 70.

On prévoit des rainures 79 dans le magasin 62 pour que aussitôt que la glissière commence sa course, un téton 80 solidaire de la glissière 70, s'engage dans l'une de celles-ci empêchant de pouvoir tourner manuellement le magasin pendant toute la durée du cycle mécanique.

On peut aussi prévoir une sécurité électrique supplémentaire lorsque le magasin est entraîné par un moteur pour empêcher par exemple de pouvoir introduire un support d'informations pendant la rotation du magasin.

Une glissière 81 (FIG.I), placée entre le magasin et la parois du boîtier comportant l'ouverture de chargement/déchargement, peut être déplacée manuellement pour prendre 2 positions, l'une retirée, dégageant l'ouverture 8, l'autre repoussée à fond obture l'ouverture 8 et ferme l'interrupteur 82 placé dans le circuit d'alimentation du moteur du magasin lui permettant d'être actif seulement à ce moment.

Cette glissière remplit d'autres fonctions et peut former par exemple la butée 45 lors de la préhension d'un disque par la pince 43 et également éviter que la poussière ne rentre dans l'appareil dans cette position.

On donne ici un exemple d'un autre système de pince pouvant agripper le support d'informations et le transporter avec soins.

Sur la partie 43 du levier 40, est fixée au moyen d'une vis 87, une pièce en acier ressort 88 dans laquelle est prévue un bord en biais 89 d'une patte 90.

Deux tétons en caoutchouc 91-92 font partie de 88 et 43, se faisant face vers l'intérieur, FIG. I0 A.

Une tige fixe 93 est prévue pour coopérer avec la partie en biais 89.

Dans la FIG. I0 B, on voit que le levier 40 en se déplaçant dans la direction de la flèche 94, fait coopérer la partie en biais 90 et la tige fixe 93, et la distance entre les tétons 91-92 est augmentée et leur permet de venir se placer de part et d'autre du bord du disque 39.

Quand la patte 90 a dépassé la tige fixe 93, le ressort de la pièce 88 lui fait reprendre sa position initiale et le bord du disque est serré entre 91-92, FIG. I0 C.

Quand le levier 40 revient maintenant dans la direction de la flèche 95, FIG. I0 D, la patte 90 passe en dessous de la tige 93, et le disque reste serré, et le levier 40 peut transporter le disque dans son appareil de reproduction.

Vers la fin de la course, le bord du disque vient en contact avec la butée 5I, et comme le levier 40 continue, la pression prévue de 91-92 permet, à un certain point, de glisser sur la surface du disque jusqu'à ce que celui-ci soit complètement libéré et libre de pouvoir être entraîné en rotation.

A la fin de la reproduction des informations, le levier 40, en se déplaçant maintenant dans l'autre direction, vient simplement repousser le disque dans son logement du magasin, sans ouvrir la pince car il n'est pas besoin d'agripper le disque dans cette direction.

Si le système doit être employé pour des usages spécifiques tels que appareils verticaux pour montage mural, les supports d'informations peuvent être déplacés de la position de stockage, directement dans l'appareil de reproduction, par gravité, des pinces de serrage n'étant pas nécessaires dans ce cas.

La FIG. II donne un exemple et représente les mêmes éléments que ceux représentés dans la FIG. 6 mais montrés dans une position verticale.

Le disque 39 peut glisser dans 2 rails 96 faisant partie du magasin.

Une lamelle ressort 97 est fixée en 98 sur le magasin également, et maintient le disque centré.

Une glissière 99 est maintenue engagée dans l'encoche 37 sous l'action du ressort 100.

Aussitôt que la came 32 commence à tourner dans la direction de la flèche 35 pour commencer le cycle, l'encoche 37 repousse la glissière 99 dans la direction de la flèche I0I de la position I02 dans la position I03, et qui coopère avec la partie I04 de la lamelle ressort 97 dans la direction de la flèche I05.

Le disque est libéré et tombe sur la partie 43 du levier 40, qui en descendant permet au disque de suivre par gravité, de la position B à A.

Quand à la fin de la reproduction des informations la came continue à tourner pour réaliser la seconde partie du cycle, le levier 40 repousse, par la partie 43, le disque 39 dans sa position de stockage, la glissière 99 s'engage dans l'encoche 37 et libère la lamelle ressort 97 qui maintient à nouveau le disque centré dans le magasin.

## Revendications

1. Changeur de supports d'informations tels que disques ou cartes optiques, disques en enveloppes ou cassettes individuelles de protection etc., caractérisé en ce que des moyens sont prévus pour réaliser un magasin mobile de supports d'informations, en forme d'anneau dans lesquels les supports sont disposés à plat dans un plan proche de l'horizontale, parallèlement les uns par rapport aux autres, mais légèrement inclinés et décalés angulairement afin que les supports puissent se chevaucher partiellement, de façon régulière sur le pourtour de l'anneau; des moyens sont prévus pour positionner dans le milieu de l'anneau, un appareil d'enregistrement/reproduction, fixe dans son plan horizontal; des moyens sont prévus pour transporter le support, du magasin vers l'appareil de reproduction et vice versa; des moyens sont prévus pour maintenir centrés, les supports d'informations dans le magasin et des moyens sont prévus pour maintenir une relation directe entre les éléments de repérage et d'identification et la position des supports d'informations.

2. Changeur selon la revendication 1, caractérisé en ce que les moyens prévus pour réaliser le magasin de supports d'informations soient réalisés par deux parois planes en forme d'anneau et de parois ou guides intermédiaires dans lesquels les supports peuvent se guider dans une position forcée proche de l'horizontale, décalés les uns par rapport aux autres.

3. Changeur selon l'une des revendications 1 à 2, caractérisé en ce que les moyens pour maintenir une relation directe entre les éléments de repérage et d'identification et la position des supports d'informations soient réalisés par des inscriptions ou graphismes solidaires du magasin mobile, et une fenêtre ou aire délimitée sur l'appareil fixe.

4. Changeur selon l'une des revendications 1 à 3, caractérisé en ce que les moyens prévus pour maintenir une relation directe entre les éléments de repérage et d'identification et la position des supports d'informations soient réalisés par des frotteurs ou balais de court-circuitage montés solidairement sur le magasin mobile et des plages conductrices d'un circuit électrique fixe.

5. Changeur selon l'une des revendications 1 à 4, caractérisé en ce que le magasin mobile est entraîné en rotation par un moteur électrique ou puisse être accédé et entraîné en rotation manuellement.

6. Changeur selon l'une des revendications 1 à 5, caractérisé en ce que les moyens prévus pour transporter les supports d'informations du magasin vers l'appareil de reproduction et vice versa soient réalisés par une came motorisée entraînant un levier muni d'une pince susceptible d'agripper le bord du support, la pince s'ouvrant automatiquement lorsqu'une pression relative suffisante entre la pince et le bord du support est atteinte et enserre le bord pour permettre une traction de translation, la pince se dégageant automatiquement lorsque le support rencontre une butée sur sa course; lors de la poussée du support d'informations vers le magasin, la pression relative entre la pince et le bord du support étant trop faible, la pince ne s'ouvre pas et repousse simplement le support par son bord sans s'agripper, jusqu'à proximité de son emplacement dans le magasin.

7. Changeur selon l'une des revendications 1 à 6, caractérisé en ce que les moyens prévus pour transporter les supports d'informations du magasin vers l'appareil de reproduction et vice versa soient réalisés par une glissière de translation se déplaçant dans sensiblement le même plan que celui des supports d'informations dans le magasin et munie de deux branches pour pousser et tirer le support d'informations dans ses positions.

8. Changeur selon la revendication 7, caractérisé en ce que la glissière de translation soit entraînée par un moteur électrique ou puisse être entraînée manuellement.

9. Changeur selon l'une des revendications 1 à 8, caractérisé en cd que les moyens prévus pour maintenir centrés les supports d'informations dans le magasin soient réalisés par des pattes ressorts moulées directement dans les parois du magasin ou fixées sur le magasin.

10. Changeur selon la revendication 9, caractérisé en ce que les pattes formant ressort soient munie chaque fois de 2 branches venant coopérer avec le bord du support d'information afin d'agir aussi bien à la sortie ou à l'entrée automatique du support dans le magasin que lorsque le support est introduit manuellement dans l'autre sens dans le magasin.

11. Changeur selon l'une des revendications 7 ou 8, caractérisé en ce que la glissière de translation bloque automatiquement la possibilité de rotation du magasin aussitôt que celui-ci quitte sa position d'attente, dégagée.

12. Changeur selon la revendication 11, caractérisé en ce que les moyens prévus pour empêcher la rotation du magasin soient un téton monté solidairement sur la glissière et pouvant s'engager dans des rainures pratiquées dans le magasin.

13. Changeur selon l'une des revendications 1 à 12, caractérisé en ce que le boîtier de l'appareil comporte une ouverture magasin, chaque position étant identifiée automatiquement par les inscriptions ou graphismes correspondants portés par le magasin.

FIG.1

FIG.2

FIG.3

FIG. 4

FIG. 5

FIG. 6

FIG. 7

EP 0 344 814 A2

FIG.8

FIG.9

FIG.10

FIG. 11